# EUROPÄISCHE PATENTSCHRIFT

(11) **EP 1 724 495 B1**
(45) Veröffentlichungstag und Bekanntmachung des Hinweises auf die Patenterteilung: **12.09.2007**
(21) Anmeldenummer: 05010812.5
(22) Anmeldetag: 19.05.2005
(51) Int. Cl.: F16H 7/02, F16H 55/17

(54) **Zahnriementrieb und Verfahren zur Herstellung einer Riemenscheibe für einen Zahnriementrieb**
Toothed belt drive and method of making a pulley for a toothed belt drive
Transmission à courroie crantée et procédé de fabrication d'un poulie pour transmission à courroie crantée

(43) Veröffentlichungstag der Anmeldung: 22.11.2006
(73) Patentinhaber: Matthias Pesch & Michael Ebner GbR, 70192 Stuttgart (DE)
(72) Erfinder: Pesch, Matthias, 70192 Stuttgart (DE); Ebner, Michael, 70563 Stuttgart (DE)
(74) Vertreter: Riedel, Peter

(56) Entgegenhaltungen:
- CH-A- 687 272
- DE-A1- 1 650 657
- DE-C- 831 630
- US-A- 2 770 977

## Beschreibung

Die Erfindung betrifft einen Zahnriementrieb und ein Verfahren zur Herstellung einer Riemenscheibe für einen Zahnriementrieb.

Aus der US 2,770,977 ist ein Zahnriementrieb bekannt, dessen Riemenscheibe einen umlaufenden Führungswulst besitzt. Der Führungswulst ist einteilig mit der Riemenscheibe ausgebildet und kann beispielsweise in einem Gußverfahren hergestellt sein. Bei der Herstellung der Riemenscheibe in einem Gußverfahren lassen sich die Zähne jedoch nur mit geringer Genauigkeit herstellen. Eine spanende Bearbeitung der Zähne ist mit hohem Aufwand verbunden, da die Zähne der beiden Zahnreihen aufgrund des mittig angeordneten Wulstes nicht in einem einzigen Bearbeitungsschritt hergestellt werden können. Ferner muß bei spanender Bearbeitung für den Werkzeugauslauf ein Abstand zwischen dem Wulst und der Verzahnung vorgesehen werden, so daß der Zahnriemen nicht an den Flanken des Wulstes geführt werden kann und die für die Kraftübertragung zur Verfügung stehende Fläche der Zähne verringert ist.

Bei mehrteiliger Ausbildung der Riemenscheibe aus zusammengefügten Scheiben erhöht sich der Aufwand für die Fertigung der Riemenscheibe, da die Scheiben miteinander verbunden, beispielsweise miteinander verschraubt werden müssen.

Die CH 687 272 A5 offenbart einen Zahnriementrieb mit einer Zahnscheibe, die eine Ringnut besitzt. In die Ringnut ist ein offener Ring aus Runddraht eingelegt. Der Runddraht greift in eine Längsnut des Zahnflachriemens des Zahnriementriebs ein, so dass der Zahnflachriemen seitlich geführt ist.

Die DE 1 775 612 A, aus der ein Zahnriementrieb und Verfahren mit dem Merkmalen des Oberbegriffes der Ansprüche 1 und 8 bekannt ist, offenbart eine Zahnscheibe, die eine oder mehrere Zahnfußrillen besitzt, die so aufgefüllt werden, dass ein Führungsprofil entsteht. Das Führungsprofil kann aus mehreren Stücken bestehen.

Der Erfindung liegt die Aufgabe zugrunde, einen Zahnriementrieb der gattungsgemäßen Art zu schaffen, der einfach herstellbar ist und der eine gute Führung des Zahnriemens gewährleistet, sowie Verfahren zur Herstellung einer Riemenscheibe für einen Zahnriementrieb anzugeben.

Diese Aufgabe wird durch einen Zahnriementrieb mit den Merkmalen des Anspruchs 1 und durch ein Verfahren mit den Merkmalen des Anspruchs 8 gelöst.

Es ist vorgesehen, dass die Riemenscheibe mindestens eine in Umfangsrichtung verlaufende Nut besitzt, die die Verzahnung der Riemenscheibe in mindestens zwei Zahnreihen teilt und dass die Führung ein Ring ist, der als separates Bauteil ausgebildet und in der Nut der Riemenscheibe gehalten ist. Der Ring ist an mindestens einer Teilstelle an seinem Umfang geteilt.

Die Nut in der Riemenscheibe kann auf einfache Weise nachträglich in die Verzahnung eingebracht werden. Dadurch, dass der Ring mindestens eine Teilstelle besitzt, an der er an seinem Umfang geteilt ist, kann der Ring von außen in der Nut montiert werden. Am Zahnriemen müssen keine zusätzlichen Mittel zur Führung des Zahnriemens vorgesehen werden, so dass der Zahnriemen auf einfache Weise gefertigt werden kann. Im Zahnriemen ist zur Führung lediglich eine Längsnut vorgesehen, die mit der Führung an der Riemenscheibe zusammenwirkt. Dadurch kann auf einfache Weise eine sichere Führung des Zahnriemens auf der Riemenscheibe sichergestellt werden. Dadurch, daß der Ring als separates Bauteil ausgebildet ist, kann er aus einem anderen Material bestehen als die Riemenscheibe. Beispielsweise kann der Ring aus einem weicheren Material bestehen als die Riemenscheibe, so daß der Verschleiß des Zahnriemens an der Führung minimiert werden kann. Gleichzeitig kann durch geeignete Materialauswahl eine gute Führung des Zahnriemens auf der Riemenscheibe sichergestellt werden.

Insbesondere besitzt der Ring mehrere Teilstellen und besteht aus mehreren Teilabschnitten. Durch die mehrteilige Ausbildung des Rings kann eine einfache Montage des Rings an der Riemenscheibe von außen erreicht werden. Die Teilabschnitte des Rings werden in radialer Richtung von außen in der Nut der Riemenscheibe angeordnet und dort festgelegt.

Zweckmäßig ist der Ring dadurch in der Nut gehalten, daß die an einer Teilstelle des Rings aneinanderstoßenden Abschnitte des Rings miteinander verbunden sind. Dabei kann der Ring in der Nut drehbeweglich sein. Dadurch, daß der Innendurchmesser des Rings kleiner als der Außendurchmesser der Riemenscheibe im Bereich einer Zahnreihe ist, ist der Ring in der Nut gehalten und trotz seiner Drehbeweglichkeit ausreichend fixiert. Der Ring kann jedoch auch dadurch in der Nut festgelegt sein, daß die Teilabschnitte des Rings mit der Riemenscheibe verbunden sind. In diesem Fall können die Teilabschnitte des Rings in der Nut zueinander einen Abstand aufweisen, so daß zwischen den Teilabschnitten jeweils ein Spalt gebildet ist. Dadurch müssen die Teilabschnitte an den Teilstellen weniger genau gefertigt sein. Die Spaltbreite ist dabei so zu wählen, daß die Führung des Zahnriemens nicht beeinträchtigt wird. Es kann vorteilhaft sein, daß sowohl die Teilabschnitte des Rings untereinander als auch mit der Riemenscheibe verbunden sind. Zur Verbindung der Teilabschnitte des Rings mit der Riemenscheibe ist vorgesehen, daß jeder Abschnitt des Rings mindestens einen, insbesondere mindestens zwei radial nach innen ragende Stifte besitzt, die in entsprechende Bohrungen am Nutgrund der Riemenscheibe ragen. Durch geeignete Auswahl der Passung von Stift und Bohrung wird durch die radiale Ausrichtung der Stifte bei mindestens zwei Stiften je Abschnitt eine Klemmung des Rings an der Riemenscheibe erreicht. Die Montage kann in einfacher Weise durch Aufklipsen erfolgen. Der Stift kann jedoch auch in die Bohrung in der Riemenscheibe eingepreßt werden, so daß ein Stift für jeden Teilabschnitt des Rings ausreichend ist.

Vorteilhaft ist der Ring stoffschlüssig in der Nut gehalten. Die stoffschlüssige Verbindung ist insbesondere eine Schweißverbindung oder eine Klebverbindung. Der Ring kann auch über eine formschlüssige Verbindung in der Nut gehalten sein. Die formschlüssige Verbindung ist vorzugsweise eine Schnappverbindung. Der Ring kann auch über eine stoffschlüssige und eine formschlüssige Verbindung in der Nut gehalten sein. Auch eine kraftschlüssige Verbindung kann vorteilhaft sein. Als kraftschlüssige Verbindung kann insbesondere eine Schraubenverbindung vorgesehen sein. Auch ein Preßverbund oder eine Klemmverbindung kann zweckmäßig sein, beispielsweise bei einer Verbindung mit einem Bolzen, der in eine Bohrung eingepreßt ist. Die kraftschlüssige Verbindung kann mit einer formschlüssigen und/oder einer stoffschlüssigen Verbindung kombiniert sein.

Ein einfach herstellbarer Zahnriementrieb wird auch dadurch erreicht, daß die Riemenscheibe mindestens eine in Umfangsrichtung verlaufende Nut besitzt, die die Verzahnung der Riemenscheibe in mindestens zwei Zahnreihen teilt und daß die Führung ein Ring ist, der als separates Bauteil ausgebildet ist und der überwiegend aus einem thermoplastischen Kunststoff besteht, wobei der Ring in der Nut durch Verkleinern des Innendurchmessers des Rings unter Einwirkung von Druck und/oder Temperatur festgelegt ist.

Der Kunststoffring ist demnach einteilig ausgebildet und kann beispielsweise mittels eines Kalibrierverfahrens in die Nut eingepreßt und dadurch in der Nut fixiert werden. Die Riemenscheibe mit der Nut kann auf einfache Weise hergestellt werden. Auch der Ring kann einfach beispielsweise in einem Spritzgußverfahren hergestellt sein. Beim Verpressen des Rings in der Nut durch Kalibrieren erfolgt außerdem eine Verfestigung des Materials, so daß sich verbesserte Festigkeitseigenschaften des Rings ergeben.

Vorzugsweise entspricht der Außendurchmesser des Rings etwa dem Außendurchmesser der Riemenscheibe im Bereich einer Zahnreihe. In diesem Fall kann die Nut im Zahnriemen bis zum Zahnfuß der Verzahnung im Zahnriemen ausgebildet werden. Der Zahnriemen liegt mit seinem Nutgrund am Außenumfang des Rings auf und ist hier zusätzlich geführt. Um einen sicheren Halt des Rings auf der Riemenscheibe zu gewährleisten, ist vorgesehen, daß der Innendurchmesser des Rings etwa dem Außendurchmesser der Riemenscheibe im Nutgrund entspricht.

Um eine sichere Führung des Zahnriemens auf der Riemenscheibe zu gewährleisten, ist vorgesehen, daß der Ring aus einem härteren Material besteht als der Zahnriemen. Der Ring besteht vorzugsweise mindestens teilweise aus Aluminium, Stahl oder Kunststoff. Der Zahnriemen besteht zweckmäßig aus Kunststoff wie beispielsweise Thermoplast oder Elastomer, vorzugsweise mindestens teilweise aus Polyurethan, Neoprene oder Silikon.

Zweckmäßig besitzt der Ring einen trapezförmigen Querschnitt. Dabei sind die den Zahnreihen zugewandten Flanken des Rings geneigt. Die Neigung der Flanken gewährleistet eine Selbstzentrierung des Zahnriemens auf der Riemenscheibe. Um eine große Kraftübertragung bei geringer Baugröße der Riemenscheibe zu erreichen, kann vorgesehen sein, daß der Ring einen dreieckigen Querschnitt besitzt. Der Ring kann dadurch sehr schmal ausgebildet werden, so daß die zur Kraftübertragung nutzbare Zahnflankenfläche durch die Führung nur geringfügig verkleinert wird. Es kann vorteilhaft sein, daß der Ring einen rechteckigen Querschnitt besitzt. Der Querschnitt des Rings ist insbesondere spiegelsymmetrisch. Es ist vorgesehen, daß der Zahnriemen an den Flanken des Rings geführt ist. Die Nut im Zahnriemen muß dadurch nicht tiefer ausgebildet werden als der Zahnfuß der Verzahnung des Zahnriemens. Die Stabilität des Zahnriemens wird durch die Nut dadurch nur unerheblich beeinflußt. Zahnriemen und Führung können bei entsprechender Ausbildung der Führung über die gesamte Zahnhöhe des Zahnriemens zusammenwirken, so daß sich eine sichere Führung des Zahnriemens ergibt.

Zur Herstellung einer Riemenscheibe für einen Zahnriementrieb ist vorgesehen, daß der Umfang der Riemenscheibe mit einer Verzahnung und mindestens einer in Umfangsrichtung der Riemenscheibe verlaufenden Nut versehen wird, wobei die Nut die Verzahnung in mindestens zwei Zahnreihen teilt. Anschließend wird in der Nut von außen ein mehrteilig ausgebildeter Ring angeordnet. Der Ring wird in der Nut fixiert. Fixierung ist dabei so zu verstehen, daß der Ring sich nicht von der Riemenscheibe lösen kann und schließt eine drehbewegliche Anordnung mit ein. Dadurch, daß der Ring erst nachträglich an der Riemenscheibe festgelegt wird, kann die Verzahnung der Riemenscheibe auf einfache Weise und mit hoher Genauigkeit hergestellt werden. Die Nut kann in die Riemenscheibe eingefräst oder eingedreht werden. Auch dieser Bearbeitungsschritt kann mit hoher Genauigkeit erfolgen. Dadurch, daß der Ring mehrteilig ausgebildet ist, läßt er sich auf einfache Weise in der Nut anordnen. Die Fixierung des Rings in der Nut kann formschlüssig, kraftschlüssig oder stoffschlüssig erfolgen.

Zweckmäßig wird der Ring dadurch in der Nut fixiert, daß jeder Teilabschnitt des Rings in der Nut fixiert wird. Die Teilabschnitte des Rings sind dadurch unabhängig voneinander in der Nut gehalten. Der Ring kann jedoch auch dadurch in der Nut fixiert werden, daß die Teilabschnitte des Rings aneinander befestigt werden. Beispielsweise durch eine Schnappverbindung an den Teilabschnitten des Rings oder durch Verkleben der Teilabschnitte des Rings miteinander kann eine schnelle, sichere Verbindung hergestellt werden. Die Teilabschnitte des Rings können auch miteinander verschraubt werden. Durch die Verbindung der Teilabschnitte des Rings miteinander kann der Ring drehbeweglich an der Riemenscheibe fixiert sein. Der Innendurchmesser des Rings kann jedoch auch so gewählt sein, daß der Ring nach Verbindung der Teilabschnitte miteinander unbeweglich an der Riemenscheibe fixiert ist.

Ein weiteres Verfahren zur Herstellung einer Riemenscheibe für einen Zahnriementrieb sieht vor, daß der Umfang der Riemenscheibe mit einer Verzahnung und mindestens einer in Umfangsrichtung der Riemenscheibe verlaufenden Nut versehen wird, wobei die Nut die Verzahnung in mindestens zwei Zahnreihen teilt, anschließend in der Nut ein Ring angeordnet wird, dessen Innendurchmesser größer als der Außendurchmesser der Riemenscheibe im Bereich einer Zahnreihe ist und der überwiegend aus einem thermoplastischen Kunststoff besteht, und anschließend der Durchmesser des Rings unter Einwirkung von Druck und/oder Temperatur verkleinert wird, so daß der Innendurchmesser des Rings kleiner als der Außendurchmesser der Riemenscheibe im Bereich einer Zahnreihe ist.

Dadurch, daß der Ring zunächst einen Innendurchmesser besitzt, der größer als der Außendurchmesser der Riemenscheibe im Bereich einer Zahnreihe ist, kann der Ring über die Zahnreihe in axialer Richtung der Riemenscheibe, also in Querrichtung des Zahnriemens, auf die Riemenscheibe aufgeschoben und in der Nut angeordnet werden. Durch die Verkleinerung des Durchmessers des Rings, beispielsweise durch Kalibrieren bzw. Verpressen des Rings in der Nut kann der Ring auf einfache Weise in der

Nut fixiert werden. Die Durchmesserverkleinerung bewirkt zusätzlich eine Vergrößerung der Festigkeit des Rings, so dass sich die mechanische Stabilität der Führung durch das Verpressen des Rings erhöht.

Ausführungsbeispiele der Erfindung werden im folgenden anhand der Zeichnung erläutert. Es zeigen:
- Fig. 1: einen Zahnriementrieb in Draufsicht mit teilweise geschnitten dargestelltem Zahnriemen,
- Fig. 2: einen Schnitt durch einen Zahnriemen,
- Fig. 3 bis Fig. 5: ausschnittsweise vergrößerte Darstellungen eines Rings in einer Nut einer Riemenscheibe,
- Fig. 6: einen zweiteiligen Ring in Seitenansicht,
- Fig. 7: den Ausschnitt VII aus Fig. 6 in vergrößerter Darstellung,
- Fig. 8: eine ausschnittsweise vergrößerte Seitenansicht einer Ausführungsvariante einer Teilstelle des Rings aus Fig. 6,
- Fig. 9 und Fig. 10: Ansichten entlang der Linie IX-IX in Fig. 8 auf Ausführungsvarianten der Teilstelle eines Rings,
- Fig. 11: eine ausschnittsweise vergrößerte Seitenansicht einer Ausführungsvariante der Teilstelle des Rings aus Fig. 6,
- Fig. 12: einen Ring in Seitenansicht,
- Fig. 13: den Ausschnitt XIII aus Fig. 12 in vergrößerter Darstellung,
- Fig. 14: eine Ausführungsvariante des Rings aus Fig. 12 in ausschnittsweiser, vergrößerter Darstellung.

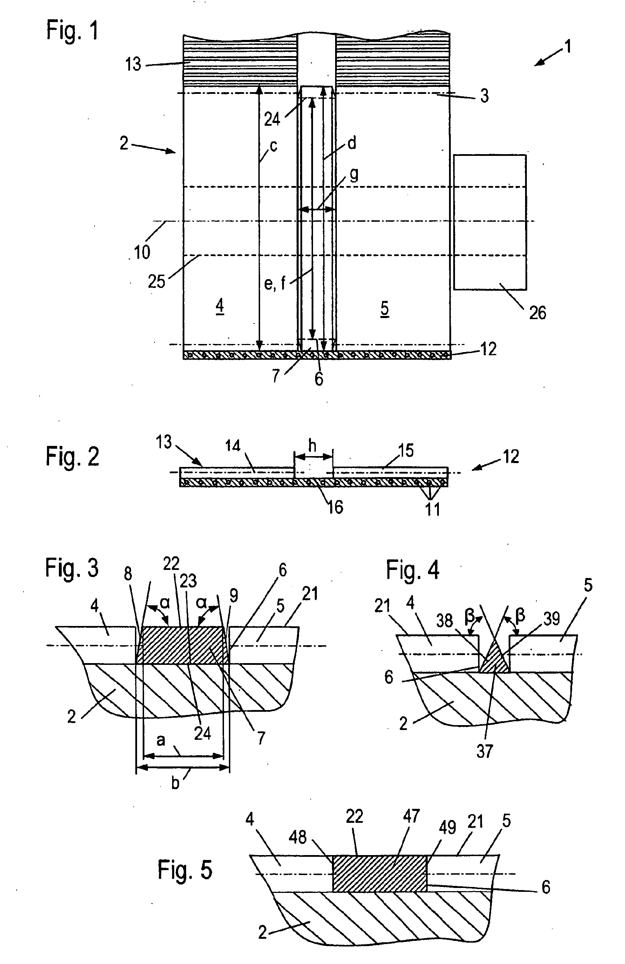

Der in Fig. 1 gezeigte Zahnriementrieb 1 besitzt eine Riemenscheibe 2 und einen an der Riemenscheibe 2 geführten Zahnriemen 12. Die Riemenscheibe 2 besitzt eine Symmetrieachse 10, zu der die Riemenscheibe 2 rotationssymmetrisch ausgebildet ist. Die Symmetrieachse 10 ist gleichzeitig die Drehachse, um die die Riemenscheibe 2 angetrieben ist und legt die Längsrichtung, also die axiale Richtung der Riemenscheibe 2 und die Querrichtung des Zahnriemens 12 fest. Die Riemenscheibe 2 ist als Antriebsscheibe ausgebildet und auf einer Antriebswelle 25 festgelegt, die über ein Antriebsrad 26 um die Symmetrieachse 10 rotierend angetrieben ist. Die Riemenscheibe 2 kann auch als Umlenkscheibe ausgebildet sein. Die Riemenscheibe 2 besitzt an ihrem Umfang eine Verzahnung 3. Etwa mittig in der Riemenscheibe 2 ist eine umlaufende Nut 6 angeordnet, deren Tiefe etwa der Höhe der Zähne der Verzahnung 3 entspricht. Die Nut 6 kann jedoch auch tiefer ausgebildet sein. Die Nut 6 teilt die Verzahnung 3 in eine erste Zahnreihe 4 und eine zweite Zahnreihe 5. Es können auch mehrere Nuten am Außenumfang der Riemenscheibe 2 vorgesehen sein. Die Nut 6 muß nicht mittig in der Riemenscheibe 2 angeordnet sein. Um eine Führung des Zahnriemens 12 zu gewährleisten, soll die Nut 6 jedoch so angeordnet sein, dass beidseitig der Nut Zahnreihen angeordnet sind. In der Nut 6 ist ein Ring 7 angeordnet. Der Außendurchmesser d des Rings 7 entspricht etwa dem Außendurchmesser c der Riemenscheibe 2 im Bereich einer der Zahnreihen 4, 5. Der Riemen 12 liegt am Außenumfang des Rings 7 an. Der Innendurchmesser e des Rings 7 entspricht etwa dem Außendurchmesser f der Riemenscheibe im Nutgrund 24 der Nut 6.

Wie auch der Schnitt in Fig. 2 zeigt, besitzt der Zahnriemen 12 eine Verzahnung 13 sowie eine Längsnut 16, die die Verzahnung 13 in eine erste Zahnreihe 14 und eine zweite Zahnreihe 15 teilt. Die Zahnreihe 14 wirkt im Betrieb mit der ersten Zahnreihe 4 der Riemenscheibe 2 zusammen und die zweite Zahnreihe 15 mit der zweiten Zahnreihe 5 der Riemenscheibe 2. Die in Fig. 2 gezeigte Breite h der Nut 16 entspricht der in Fig. 1 gezeigten Breite g der Nut 6. Der Zahnriemen 12 besitzt in Längsrichtung des Zahnriemens 12 verlaufende Zugträger 11 zur Aufnahme der Längskräfte. Es kann jedoch auch ein Zahnriemen 12 ohne Zugträger 11 zum Einsatz kommen.

In Fig. 3 ist der Ring 7 in der Nut 6 vergrößert und im Schnitt dargestellt. Der Ring 7 besitzt einen trapezförmigen Querschnitt, wobei die Breite b am Innenumfang 23 des Rings 7 etwa der in Fig. 1 gezeigten Breite g der Nut 6 entspricht. Die Breite a am Außenumfang 22 des Rings 7 ist kleiner als die Breite b am Innenumfang 23. Der Ring 7 besitzt eine geneigte Flanke 8, die der ersten Zahnreihe 4 zugewandt ist, sowie eine Flanke 9, die der zweiten Zahnreihe 5 zugewandt ist. Die Flanken 8 und 9 sind gegenüber dem Außenumfang 22 des Rings 7 um einen Winkel α geneigt. Der Außenumfang 22 des Rings 7 verläuft parallel zur Symmetrieachse 10 und zum Außenumfang 21 der Verzahnung 3 im Bereich der Zahnreihen 4, 5. Vorzugsweise sind beiden Flanken 8, 9 um den gleichen Winkel α geneigt. Es können jedoch auch unterschiedliche Neigungswinkel für die beiden Flanken 8 und 9 vorteilhaft sein. Der Zahnriemen 12 ist an den Flanken 8 und 9 des Rings 7 geführt. Zusätzlich ist der Zahnriemen 12 am Außenumfang 22 des Rings 7 geführt. Der Außendurchmesser d des Rings 7 kann jedoch auch kleiner als der Außendurchmesser c der Riemenscheibe 2 sein, so daß der Zahnriemen 12 in radialer Richtung nur am Umfang der Verzahnung 3, also am Außenumfang oder am Innenumfang der Verzahnung 3, geführt ist.

In Fig. 4 ist ein Ausführungsbeispiel eines Rings 37 gezeigt. Der Ring 37 besitzt einen dreieckigen Querschnitt mit Flanken 38 und 39. Die Flanken 38 und 39 sind gegenüber dem Außenumfang 21 der Riemenscheibe 2 um einen Winkel β geneigt. Dabei sind beide Flanken 38, 39 um den gleichen Winkel β geneigt. Der Querschnitt des Rings 37 ist damit spiegelsymmetrisch. Es können jedoch auch unterschiedliche Neigungswinkel β für die Flanken 38 und 39 vorgesehen sein. Um eine Verletzung des Zahnriemens 12 an der nach außen weisenden Kante des Rings 37 zu vermeiden, ist vorgesehen, daß der Außendurchmesser des Rings 37 kleiner als der Außendurchmesser c der Riemenscheibe 2 ist. Die Außendurchmesser von Ring 37 und Riemenscheibe 2 können jedoch auch etwa gleich groß sein.

Ein weiteres Ausführungsbeispiel ist in Fig. 5 gezeigt. In der Nut 6 ist ein Ring 47 mit rechteckigem Querschnitt angeordnet, der Flanken 48 und 49 besitzt. Die beiden Flanken 48 und 49 verlaufen senkrecht zum Außenumfang 21 der Riemenscheibe 2. Der Ring 47 füllt die Nut 6 vollständig aus. An den Flanken 48 und 49 ist der Zahnriemen 12 geführt. Außerdem ist der Zahnriemen 12 am Außenumfang 22 des Rings 47 geführt. Der Außendurchmesser des Rings 47 entspricht dem Außendurchmesser c der Riemenscheibe 2. Der Außendurchmesser des Rings 47 kann jedoch auch kleiner als der Außendurchmesser c der Riemenscheibe 2 sein, um eine Führung am Außenumfang 22 des Rings 47 zu vermeiden. In diesem Fall ist der Zahnriemen 12 nur an den Flanken 48 und 49 des Rings 47 geführt.

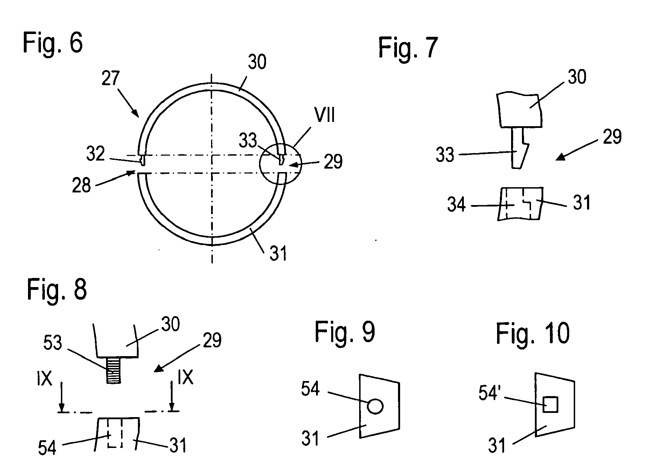

Die Fig. 6 und 7 zeigen einen Ring 27, der aus zwei Teilabschnitten 30 und 31 aufgebaut ist, die an Teilstellen 28 und 29 voneinander getrennt sind. Beide Teilabschnitte 30, 31 sind halbkreisförmig ausgebildet. An den beiden Enden des ersten Teilabschnitts 30 sind Schnapphaken 32 und 33 angeordnet. Wie die vergrößerte ausschnittsweise Darstellung in Fig. 7 zeigt, besitzt ein Ende des Teilabschnitts 31 eine Schnappöffnung 34, in der der Schnapphaken 33 eingehakt werden kann. Eine entsprechende Schnappöffnung ist für den Schnapphaken 32 vorgesehen. Dadurch können die beiden Teilabschnitte 30, 31 des Rings 27 auf einfache Weise miteinander verbunden werden. Dadurch, dass der Innendurchmesser des Rings 7 kleiner als der Außendurchmesser c der Riemenscheibe 2 im Bereich der Verzahnung 3 ist, ist der Ring 27 durch die Verbindung der beiden Teilabschnitte 30 und 31 miteinander in der Nut 6 festgelegt. Zusätzlich kann der Ring 27 an der Nut 6 befestigt werden, beispielsweise durch eine stoffschlüssige Verbindung. Der Ring 27 kann jedoch auch drehbeweglich in der Nut 6 angeordnet sein.

Fig. 8 zeigt eine Ausführungsvariante der Teilstelle 29 des Rings 27. Am Teilabschnitt 30 ist ein Bolzen 53 angeformt, der eine strukturierte Oberfläche besitzt. Die Oberfläche des Bolzens 53 kann beispielsweise geriffelt oder gewellt sein. Es kann jedoch auch ein Bolzen mit glatter Oberfläche vorgesehen sein. Am gegenüberliegenden zweiten Teilabschnitt 31 ist eine Öffnung 54 vorgesehen, deren Querschnitt dem Querschnitt des Bolzens 53 etwa entspricht. Beim Zusammenfügen der beiden Teilabschnitte 30 und 31 wird der Bolzen 53 in die Öffnung 54 eingepreßt und hält die beiden Teilabschnitte 30 und 31 kraftschlüssig zusammen.

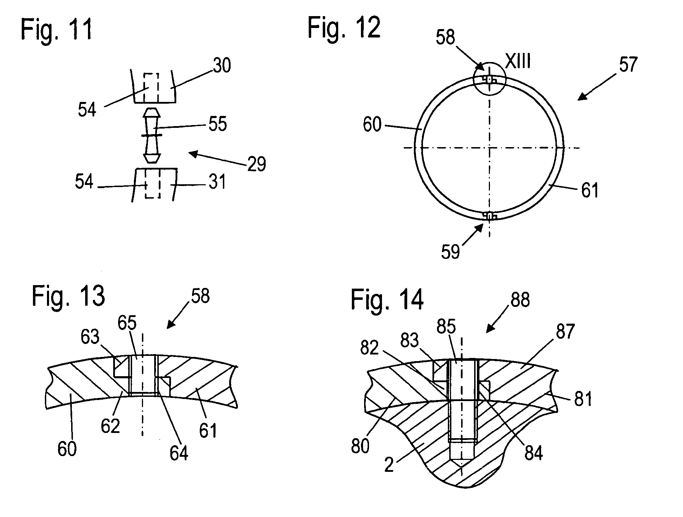

Wie Fig. 9 zeigt, kann die Öffnung 54 einen kreisförmigen Querschnitt besitzen. Statt dessen kann jedoch auch die in Fig. 12 gezeigte Öffnung 54' mit rechteckigem, insbesondere quadratischem Querschnitt vorgesehen sein. Es kann auch zweckmäßig sein, für den Bolzen 53 und die Öffnung 54 unterschiedliche Querschnitte vorzusehen. Auch andere Querschnittsformen können zweckmäßig sein.

Ein weiteres Ausführungsbeispiel der Verbindung der beiden Teilabschnitte 30 und 31 an der Teilstelle 29 ist in Fig. 11 gezeigt. Hier ist in beiden Teilabschnitten 30 und 31 jeweils eine Öffnung 54 vorgesehen, wobei die beiden Öffnungen 54 aneinander gegenüberliegend angeordnet sind. Zur Verbindung der beiden Teilabschnitte ist ein Nippel 55 vorgesehen, der beim Zusammenfügen der beiden Teilabschnitte 30, 31 mit einem Ende in den Teilabschnitt 30 und mit dem anderen Ende in den Teilabschnitt 31 ragt und die beiden Teilabschnitte so miteinander verbindet.

Ein weiteres Ausführungsbeispiel ist in Fig. 12 gezeigt. Der hier dargestellte Ring 57 besitzt einen ersten Teilabschnitt 60 und einen zweiten Teilabschnitt 61. Die beiden Teilabschnitte 60 und 61 sind identisch aufgebaut, so dass in der Fertigung nur ein Teil für den Ring 57 vorzuhalten ist. Die beiden Teilabschnitte 60 und 61 sind an zwei Teilstellen 58 und 59 miteinander verbunden.

Fig. 13 zeigt die Teilstelle 58 in vergrößerter Darstellung. Der erste Teilabschnitt 60 besitzt einen Absatz 62, der an einem Absatz 63 am zweiten Teilabschnitt 61 anliegt. Der Absatz 62 ist dabei radial innenliegend angeordnet und der Absatz 63 radial außenliegend. An der gegenüberliegenden Teilstelle 59 besitzt der erste Teilabschnitt 60 einen radial außenliegenden und der zweiten Teilabschnitt 61 einen radial innenliegenden Absatz. An der Teilstelle 58 ist eine radial zur Drehachse der Riemenscheibe 2 verlaufende Bohrung 64 angeordnet, die durch die beiden Absätze 62 und 63 verläuft. Die Bohrung 64 ist zweckmäßig in einem der Absätze als Gewindebohrung und in dem anderen der Absätze als Durchgangsbohrung ausgebildet. In die Bohrung 64 ist eine Madenschraube 65 eingeschraubt, die die beiden Teilabschnitte 60 und 61 an der Teilstelle 58 miteinander verbindet. Anstatt einer Madenschraube kann auch eine Senkkopfschraube vorgesehen sein. Es kann jedoch auch zweckmäßig sein, in die Bohrung 64 einen Stift einzupressen, der die beiden Teilabschnitte miteinander verbindet. Der Ring 57 kann in der Nut 6 der Riemenscheibe 2 drehbeweglich gehalten sein.

Fig. 14 zeigt einen Ring 87, dessen Aufbau im wesentlichen dem in Fig. 12 gezeigten Ring 57 entspricht. Der Ring 87 ist aus zwei identisch ausgebildeten Teilabschnitten 80 und 81 aufgebaut, die an der in Fig. 14 vergrößert dargestellten Teilstelle 88 miteinander und mit der Riemenscheibe 2 verbunden sind. Eine gegenüberliegend angeordnete, nicht dargestellte Teilstelle ist vorzugsweise identisch ausgebildet. An der Teilstelle 88 besitzt der Teilabschnitt 80 einen an der Riemenscheibe 2 anliegenden Absatz 82, der von einem Absatz 83 des Teilabschnitts 81 übergriffen ist. Beide Absätze 82, 83 besitzen eine radial zur Riemenscheibe 2 verlaufende Bohrung, die in die Riemenscheibe 2 fortgesetzt ist. In den Absätzen 82, 83 ist die Bohrung 84 als Durchgangsbohrung ausgebildet, während sie in der Riemenscheibe 2 mit einem Innengewinde versehen ist. In das Innengewinde ist eine Schraube 85 eingeschraubt, die die beiden Absätze 82 und 83 durchragt und den Ring 87 so an der Riemenscheibe 2 fixiert. Anstatt der Schraube 85 kann auch ein in die Riemenscheibe 2 eingepreßter Bolzen vorgesehen sein.

Alle in den Figuren 6 bis 14 gezeigten Ringe können die in den Figuren 3 bis 5 gezeigten Querschnittsformen besitzen. Auch andere, insbesondere unsymmetrische Querschnitte können jedoch vorteilhaft sein.

Zur Herstellung der Riemenscheibe 2 wird zunächst die Verzahnung 3 hergestellt. Anschließend wird die Umfangsnut 6 eingebracht. Es kann auch zweckmäßig sein, dass die Riemenscheibe 2 vor der Herstellung der Verzahnung 3 mit der Umfangsnut 6 versehen wird. Anschließend wird ein Ring 27, 37, 47, 57, 87 in der Nut 6 angeordnet. Der Ring 27, 37, 47, 57, 87 ist zweckmäßig mehrteilig ausgebildet, so dass er von radial außen in die Nut 6 eingesetzt werden kann. In der Nut 6 wird der Ring 27 anschließend fixiert. Dabei können die Teilabschnitte des Rings 27, 87 in der Nut 6 befestigt werden. Die Teilabschnitte des Rings 27, 57, 87 können jedoch auch untereinander verbunden werden. Dadurch, dass der Ring 27, 37, 47, 57, 87 einen Innendurchmesser besitzt, der kleiner als der Außendurchmesser der Riemenscheibe 2 ist, ist der Ring durch die Befestigung der Teilabschnitte des Rings aneinander in der Nut fixiert. Die Teilabschnitte des Rings können jedoch auch sowohl an der Nut 6 als auch untereinander befestigt werden. Ein mit der Riemenscheibe 2 zusammenwirkender Zahnriemen 12 kann beispielsweise extrudiert, vakuumgezogen oder in einem Gußverfahren hergestellt werden, wobei in einem Herstellungsschritt die Verzahnung 13 und die Nut 16 in der Verzahnung 13 hergestellt werden. Es kann jedoch auch zweckmäßig sein, die Nut 16 nachträglich durch spanende Bearbeitung wie Drehen, Fräsen und/ oder Schleifen in den Zahnriemen 12 einzubringen.

Der Ring 7, 27*,* 37, 47, 57, 87 besteht aus einem härteren Material als der Zahnriemen. Der Ring 7, 27, 37, 47, 57, 87 besteht insbesondere mindestens teilweise aus Aluminium, Stahl oder Kunststoff. Der Zahnriemen 12 besteht vorteilhaft mindestens teilweise aus Kunststoff, insbesondere aus Thermoplast oder Elastomer, vorzugsweise aus Polyurethan, Neoprene oder Silikon.

## Patentansprüche

1. Zahnriementrieb mit einer Riemenscheibe (2), die an ihrem Umfang eine Verzahnung (3) besitzt, und mit einem Zahnriemen (12), der eine mit der Verzahnung (3) der Riemenscheibe (2) zusammenwirkende Verzahnung (13) besitzt, wobei der Zahnriemen (12) mindestens eine Längsnut (16) besitzt, die die Verzahnung (13) des Zahnriemens (12) in mindestens zwei Zahnreihen (14, 15) teilt, und wobei die Riemenscheibe (2) eine Führung besitzt, die in die Längsnut (16) des Zahnriemens (12) ragt und die den Zahnriemen (12) gegen eine Verschiebung in axialer Richtung der Riemenscheibe (2) sichert, wobei die Riemenscheibe (2) mindestens eine in Umfangsrichtung verlaufende Nut (6) besitzt, die die Verzahnung (3) der Riemenscheibe (2) in mindestens zwei Zahnreihen (4, 5) teilt und dass die Führung ein Ring (7, 27, 37, 47, 57, 87) ist, der als separates Bauteil ausgebildet und in der Nut (6) der Riemenscheibe (2) gehalten ist,
wobei der Ring 27, 57, 87) an mehreren Teilstellen (28, 29, 58, 59, 88) an seinem Umfang geteilt ist und aus mehreren Teilabschnitten (30, 31, 60, 61, 80, 81) besteht,
**dadurch gekennzeichnet, dass** der Ring (7, 27, 57, 87) **dadurch** in der Nut (6) gehalten ist, dass die an einer Teilstelle (20, 28, 29, 58, 59, 88) des Rings (7, 27, 37, 47, 57, 87) aneinanderstoßenden Abschnitte (30, 31, 60, 61, 80, 81) des Rings (7, 27, 37, 47, 57, 87) über eine formschlüssige und/oder eine kraftschlüssige Verbindung miteinander verbunden sind.

2. Zahnriementrieb nach Anspruch 1,
**dadurch gekennzeichnet, dass** die Teilabschnitte ( 80, 81) des Rings (87) mit der Riemenscheibe (2) verbunden sind.

3. Zahnriementrieb nach Anspruch 1 oder 2,
**dadurch gekennzeichnet, dass** der Außendurchmesser (d) des Rings (7, 27, 37, 47, 57, 87) etwa dem Außendurchmesser (c) der Riemenscheibe (2) im Bereich einer Zahnreihe (4, 5) entspricht und der Innendurchmesser (e) des Rings (7, 27, 37, 47, 57, 87) etwa dem Außendurchmesser (f) der Riemenscheibe (2) im Nutgrund (24) entspricht.

4. Zahnriementrieb nach einem der Ansprüche 1 bis 3,
**dadurch gekennzeichnet, dass** der Ring (7, 27, 37, 47, 57, 87) aus einem härteren Material besteht als der Zahnriemen (12).

5. Zahnriementrieb nach einem der Ansprüche 1 bis 4,
**dadurch gekennzeichnet, dass** der Ring (7, 27, 37, 47, 57, 87) einen trapezförmigen, dreieckigen oder rechteckigen Querschnitt besitzt.

6. Zahnriementrieb nach einem der Ansprüche 1 bis 5,
**dadurch gekennzeichnet, dass** der Querschnitt des Rings (7, 27, 37, 47, 57, 87) spiegelsymmetrisch ist.

7. Zahnriementrieb nach einem der Ansprüche 1 bis 6,
**dadurch gekennzeichnet, dass** der Zahnriemen (12) an den Flanken (8, 9, 38, 39, 48, 49) des Rings (7, 37, 47) geführt ist.

8. Verfahren zur Herstellung einer Riemenscheibe (2) für einen Zahnriementrieb (1), bei dem
- der Umfang der Riemenscheibe (2) mit einer Verzahnung (3) und mindestens einer in Umfangsrichtung der Riemenscheibe (2) verlaufenden Nut (6) versehen wird, wobei die Nut (6) die Verzahnung (3) in mindestens zwei Zahnreihen (4, 5) teilt,
- in der Nut (6) ein mehrteilig ausgebildeter Ring ( 27, 37, 47, 57, 87) angeordnet wird und
- der Ring (27, 37, 47, 57, 87) in der Nut (6) fixiert wird,
**dadurch gekennzeichnet, dass** der Ring (27, 57, 87) dadurch in der Nut (6) fixiert wird, dass die Teilabschnitte (30, 31, 60, 61, 80, 81) des Rings (27, 67, 87) über eine formschlüssige und/oder eine kraftschlüssige Verbindung aneinander befestigt werden.

## Claims

1. A toothed belt drive having a pulley (2) having toothing (3) around its circumference and a toothed belt (12) which has toothing (13) which cooperates with the toothing (3) on the pulley (2), the toothed belt (12) having at least one longitudinal groove (16) which divides the toothing (13) on the toothed belt (12) into at least two rows of teeth (14, 15), and the pulley (2) having a mounting which projects into the longitudinal groove (16) in the toothed belt (12) and which secures the toothed belt (12) against axial movement of the pulley (2), the pulley (2) having at least one circumferentially running groove (6) which divides the toothing (3) on the pulley (2) into at least two rows of teeth (4, 5) and the mounting being a ring (7, 27, 37, 47, 57, 87) which is designed as a separate component and is held in the groove (6) in the pulley (2), the ring (27, 57, 87) being divided at a plurality of points (28, 29, 58, 59, 88) around its circumference and consisting of a plurality of sections (30, 31, 60, 61, 80, 81),
**characterised in that**
the ring (7, 27, 57, 87) is held in the groove (6) by dint of the fact that the sections (30, 31, 60, 61, 80, 81) of the ring (7, 27, 37, 47, 57, 87) which abut at a point (20, 28, 29, 58, 59, 88) on the ring (7, 27, 37, 47, 57, 87) are attached to one another in a positive and/or non-positive connection.

2. A toothed belt drive in accordance with claim 1,
**characterised in that**
the sections (80, 81) of the ring (87) are connected to the pulley (2).

3. A toothed belt drive in accordance with claim 1 or 2,
**characterised in that**
the external diameter (d) of the ring (7, 27, 37, 47, 57, 87) corresponds approximately to the external diameter (c) of the pulley (2) in the area of a row of teeth (4, 5), and the internal diameter (e) of the ring (7, 27, 37, 47, 57, 87) corresponds approximately to the external diameter (f) of the pulley (2) at the base of the groove (24).

4. A toothed belt drive in accordance with one of claims 1 to 3,
**characterised in that**
the ring (7, 27, 37, 47, 57, 87) consists of a harder material than the toothed belt (12).

5. A toothed belt drive in accordance with one of claims 1 to 4,
**characterised in that**
the ring (7, 27, 37, 47, 57, 87) has a trapezoid, triangular or rectangular cross section.

6. A toothed belt drive in accordance with one of claims 1 to 5,
**characterised in that**
the cross section of the ring (7, 27, 37, 47, 57, 87) is mirror symmetrical.

7. A toothed belt drive in accordance with one of claims 1 to 6,
**characterised in that**
the toothed belt (12) is mounted on the flanks (8, 9, 38, 39, 48, 49) of the ring (7, 37, 47).

8. A process for the manufacture of a pulley (2) for a toothed belt drive (1) in which
- the circumference of the pulley (2) is provided with toothing (3) and at least one groove which runs circumferentially around the pulley (2), said groove (6) dividing the toothing (3) into at least two rows of teeth (4, 5),
- a ring (27, 37, 47, 57, 87) comprising a plurality of parts is positioned in the groove (3), and
- the ring (27, 37, 47, 57, 87) is fixed in the groove (6),
**characterised in that**
the ring (27, 57, 87) is fixed in the groove (6) by dint of the fact that the sections (30, 31, 60, 61, 80, 81) of the ring (27, 67, 87) are attached to one another in a positive or non-positive connection.

## Revendications

1. Transmission à courroie crantée avec une poulie (2) pourvue d'une denture (3) sur sa circonférence, et avec une courroie crantée (12) pourvue d'une denture (13) coopérant avec la denture (3) de la poulie (2), la courroie crantée (12) étant pourvue d'au moins une rainure longitudinale (16) divisant la denture (13) de la courroie crantée (12) en au moins deux rangées de dents (14, 15), et la poulie (2) étant pourvue d'un guidage logé dans la rainure longitudinale (16) de la courroie crantée (12) et bloquant la courroie crantée (12) contre un décalage dans le sens axial de la poulie (2), la poulie (2) étant pourvue d'au moins une rainure (6) s'étendant dans le sens de la circonférence et divisant la denture (3) de la poulie (2) en au moins deux rangées de dents (4, 5), le guidage étant une bague (7, 27, 37, 47, 57, 87) réalisée comme composant séparé et maintenue dans la rainure (6) de la poulie (2),
la bague (27, 57, 87) étant divisée sur plusieurs tronçons (28, 29, 58, 59, 88) de sa circonférence et étant composée de plusieurs arcs (30, 31, 60, 61, 80, 81),
**caractérisée en ce que** la bague (7, 27, 57, 87) est maintenue dans la rainure (6) par accouplement mécanique et/ou par liaison par adhérence entre eux des arcs adjacents (30, 31, 60, 61, 80, 81) de la bague (7, 27, 37, 47, 57, 87) sur un tronçon (20, 28, 29, 58, 59, 88) de la bague (7, 27, 37, 47, 57, 87).

2. Transmission à courroie crantée selon la revendication 1, **caractérisée en ce que** les arcs (80, 81) de la bague (87) sont reliés à la poulie (2).

3. Transmission à courroie crantée selon la revendication 1 ou la revendication 2, **caractérisée en ce que** le diamètre extérieur (d) de la bague (7, 27, 37, 47, 57, 87) correspond sensiblement au diamètre extérieur (c) de la poulie (2) au niveau d'une rangée de dents (4, 5), et en ce le diamètre intérieur (e) de la bague (7, 27, 37, 47, 57, 87) correspond sensiblement au diamètre extérieur (f) de la poulie (2) au fond de la rainure (24).

4. Transmission à courroie crantée selon l'une des revendications 1 à 3, **caractérisée en ce que** la bague (7, 27, 37, 47, 57, 87) est composée d'une matière plus dure que la courroie crantée (12).

5. Transmission à courroie crantée selon l'une des revendications 1 à 4, **caractérisée en ce que** la bague (7, 27, 37, 47, 57, 87) présente une section trapézoïdale, triangulaire ou rectangulaire.

6. Transmission à courroie crantée selon l'une des revendications 1 à 5, **caractérisée en ce que** la section de la bague (7, 27, 37, 47, 57, 87) est à symétrie axiale.

7. Transmission à courroie crantée selon l'une des revendications 1 à 6, **caractérisée en ce que** la courroie crantée (12) est guidée contre les flancs (8, 9, 38, 39, 48, 49) de la bague (7, 37, 47).

8. Procédé de fabrication d'une poulie (2) pour une transmission à courroie crantée (1), où
■ la circonférence de la poulie (2) est pourvue d'une denture (3) et d'au moins une rainure (6) s'étendant dans le sens de la circonférence de la poulie (2), ladite rainure (6) divisant la denture (3) en au moins deux rangées de dents (4, 5),
■ une bague (27, 37, 47, 57, 87) composée de plusieurs pièces est logée dans la rainure (6), et où
■ la bague (27, 37, 47, 57, 87) est fixée dans la rainure (6),
**caractérisé en ce que** la bague (27, 57, 87) est fixée dans la rainure (6) par fixation l'un contre l'autre des arcs (30, 31, 60, 61, 80, 81) de la bague (27, 67, 87) par accouplement mécanique et/ou par liaison par adhérence.
